# EUROPEAN PATENT SPECIFICATION

(11) **EP 4 400 207 B1**
(45) Date of publication and mention of the grant of the patent: **22.10.2025**
(21) Application number: 24177797.8
(22) Date of filing: 27.08.2019
(51) Int. Cl.: A47J 41/00, A47J 43/00, B65D 47/20, B01F 33/00, B01F 35/00, B65D 47/14, B65D 25/08

(54) **ADJUSTABLE ADDITIVE DELIVERY SYSTEMS AND DISPENSING CLOSURE VALVES FOR THE SAME**
EINSTELLBARE ADDITIVABGABESYSTEME UND ABGABEVERSCHLUSSVENTILE DAFÜR
SYSTÈMES DE DISTRIBUTION D'ADDITIF RÉGLABLE ET SOUPAPES DE FERMETURE DE DISTRIBUTION POUR CEUX-CI

(30) Priority: 27.08.2018 US 201862723447 P; 28.12.2018 US 201816235913
(43) Date of publication of application: 17.07.2024
(62) Divisional of application: 19854883.6
(73) Proprietor: Cirkul, Inc., Tampa, FL 33619 (US)
(72) Inventor: WAGGONER, Garrett, Sarasota, 34242 (US); GAY, Andrew, Sarasota, 34242 (US); MCKEATING, Philip, Sarasota, 34242 (US); URBANIK, Thomas, Sarasota, 34242 (US); HOUSTON, Cole, Sarasota, 34242 (US); GREEN, John, Sarasota, 34242 (US)
(74) Representative: Potter Clarkson

(56) References cited:
- WO-A1-2016/081925
- WO-A1-2017/152192
- US-A1- 2001 025 859
- US-B1- 6 230 923

## Description

### PRIORITY CLAIM AND REFERENCE TO RELATED APPLICATIONS

Priority is claimed under all applicable laws, treaties, conventions and regulations, based on United States provisional application No. 62/723,447, titled DISPENSING CAP CLOSURE WITH DRIP-PREVENTING FEATURES, filed on August 27, 2018, and United States application No. 16/235,913, titled ADJUSTABLE ADDITIVE DELIVERY SYSTEMS AND DISPENSING CLOSURE VALVES FOR THE SAME, filed on December 28, 2018.

### BACKGROUND

The disclosure relates to dispensing and delivery systems for beverages and other products and more particularly to dispensing and delivery systems in which an additive, such as flavorings, concentrates or supplements, may be provided in replaceable, modular cartridges, which may include features for mixing the additive with a base liquid, such as water, as the base liquid flows through the cartridge and is consumed by a user. The disclosure further relates to dispensing and delivery systems and additive delivery systems that provide for user adjustment of the amount of additive that is mixed with the base liquid. The disclosure further relates to dispensing closures and dispensing closure valves and to mixing cartridges and additive storage and delivery systems and devices that may include such dispensing closure valves.

Recent advances in the art include adjustable mixing cartridge-based delivery systems and adjustable mixing cartridges, such as those describe in the above-referenced related applications. Such systems may mix additive with base liquid as the base liquid flows through the mixing cartridge and thereby add flavor to the base liquid as a user draws the mixture and through the cartridge. Such systems may include a one-way valve to prevent backflow of base fluid through the cartridge, thus maintaining a supply of base fluid in an unmixed state. The cartridge may have defined therein, upstream from the one-way valve, a mixing zone or mixing section, which may be a defined volume within the cartridge where the additive is added to and mixed with the base liquid. In such systems, a push-pull cap closure may be employed for permitting a user to selectively dispense mixed liquid from the dispenser or close the dispenser by snapping the push-pull cap in a closed position. Such closures may be cumbersome to some users since the opening operation typically requires two-hand operation - one hand to hold the container and another to pull the closure open. In addition, such closures do not facilitate a quick termination of flow when contents are dispensed, leaving the possibility for dripping of contents after a user takes a sip, which is undesirable. Further, such closures may not be ideal for dispensing for all users tend to have somewhat restricted flow and may be undesirable when higher flow rates and volumes of dispensed liquid are desired by a user. And still further, pushing the cap closed may slightly compress the mixed liquid held in a mixing zone or mixing section in the cartridge and thus may result in the undesirable event of a small amount of mixed liquid may drip from and/or be forced out of the cap. Still further, during dispensing of such systems, when the cartridge and a container are inverted and the cap is open, mixture may drip from the cartridge even when a user is not consuming the contents. US2001025859 (A1) describes a dispensing container which stores two or more separated fluids and blends the fluids when dispensing. The container has two or more liquid receptacles and a cap which threads to the bottle. The receptacles include the open interior of the container, and an interior vessel separate and removable from the container. The cap is connected a mixing circuit which retrieves and blends fluids taken from the receptacles.

There is a need in the art for improvements to such additive delivery systems that address the aforementioned challenges and others.

### SUMMARY OF THE INVENTION

It is an object of the present invention to provide an additive delivery system for beverages and other products that addresses the aforementioned challenges. The invention is defined by the independent claims. The dependent claims define advantageous embodiments.

In accordance with aspects of the disclosure, an additive delivery system may include a dispensing closure valve to provide improved control of residual mixed liquid in the mixing zone or mixing section of the delivery system and may provide improved flow and dispensing characteristics. The dispensing closure valve may provide improved flow and dispensing characteristics as mixture is dispensed from the cartridge. The dispensing closure valve may prevent the discharge of, and contain residual mixed liquid within a mixing section of the cartridge when the cartridge is not in use by a user.

According to further aspects of the disclosure, the dispensing closure valve may interact with a base liquid flow valve to provide improved flow and control characteristics. The combination of a one-way base liquid flow valve and the dispensing closure valve, with a mixing section defined therebetween, has been discovered by applicant to produce desirable flow characteristics. More specifically, the configuration exhibits a constant proportional relationship between suction pressure and flow rate within a suction pressure range that may typically be applied by a user.

**Unless** otherwise defined, all technical and scientific terms used herein have the same meaning as commonly understood by one of ordinary skill in the art to which the described invention pertains. Although other implementations, methods and materials similar to those described herein can be used to practice the invention, suitable and example implementations, methods and materials are described below. In addition, the materials, methods and examples are illustrative only and are not intended to be limiting in any way. The details of one or more example implementations of the invention are set forth in the accompanying drawings and the description below. Other features, objects and advantages of the invention will be apparent from the description and drawings, and from the claims.

### DESCRIPTION OF THE DRAWINGS

The above and other attendant advantages and features of the invention will be apparent from the following detailed description together with the accompanying drawings, in which like reference numerals represent like elements throughout. It will be understood that the description and embodiments are intended as illustrative examples and are not intended to be limiting to the scope of invention, which is set forth in the claims appended hereto. The following Figures, unless otherwise indicated, are all example apparatus, systems and methods according to aspects of the disclosure.
FIG. 1 is an exploded perspective view of an additive delivery system environment and dispensing closure according to aspects of the disclosure.
FIG. 2 is an exploded cross-section view of an additive delivery system environment and dispensing closure according to aspects of the disclosure.
FIG. 3 is a perspective of a closure base.
FIG. 4 is a cross-section of the closure base of FIG. 3.
FIG. 5 is perspective of a valve retainer.
FIG. 6 is a cross-section of the valve retainer of FIG. 4.
FIG. 7 is a perspective of a dispensing valve.
FIG. 8 is a cross-section of the dispensing valve of FIG. 7.
FIG. 9 is a cross-section of an assembled dispensing closure on a mixing cartridge with a closure cap in a removed position.
FIG. 10 is a schematic illustration of the components of a cartridge-based additive delivery system including a dispensing valve.
FIG. 11 is a graph illustrating flow rate vs suction pressure for a cartridge based additive delivery system and valve components thereof.
FIG. 12 is a cross-section of an assembled dispensing closure on a mixing cartridge with a closure cap in a closed position.
FIG. 13 is an exploded perspective view of an alternative embodiment of a dispensing closure system.
FIG. 14 is an exploded cross-section of the embodiment of FIG. 13.
FIG. 15 is an assembled cross-section of the embodiment of FIG. 13.

### DETAILED DESCRIPTION

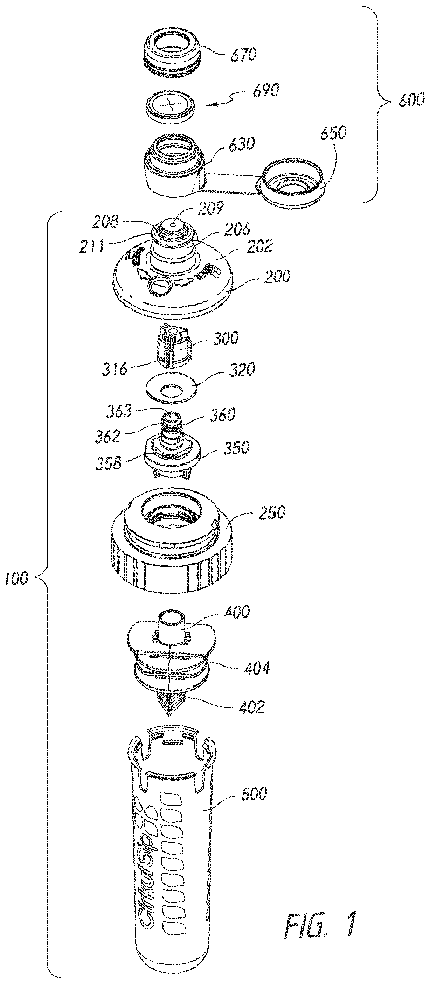

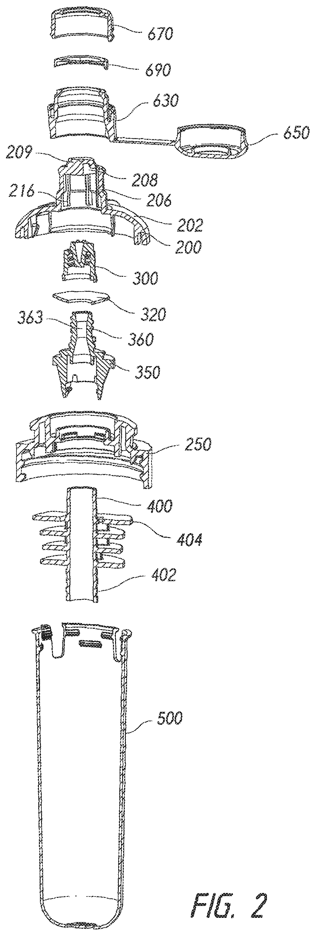

FIGS. 1 and 2 illustrate an example dispensing closure and components of a mixing cartridge environment suitable for implementing aspects of the present disclosure. The dispensing closure is designated with the reference 600 and the environment is generally designated with the reference 100. The example components of the environment 100 are described in the above-identified related application and will be described briefly herein, as necessary for an understanding of the present disclosure. In accordance with aspects of the disclosure, a mixture dispensing closure, generally referenced as 600, may be provided in the mixing cartridge environment to achieve improvements as noted above in the Summary section and as further detailed herein.

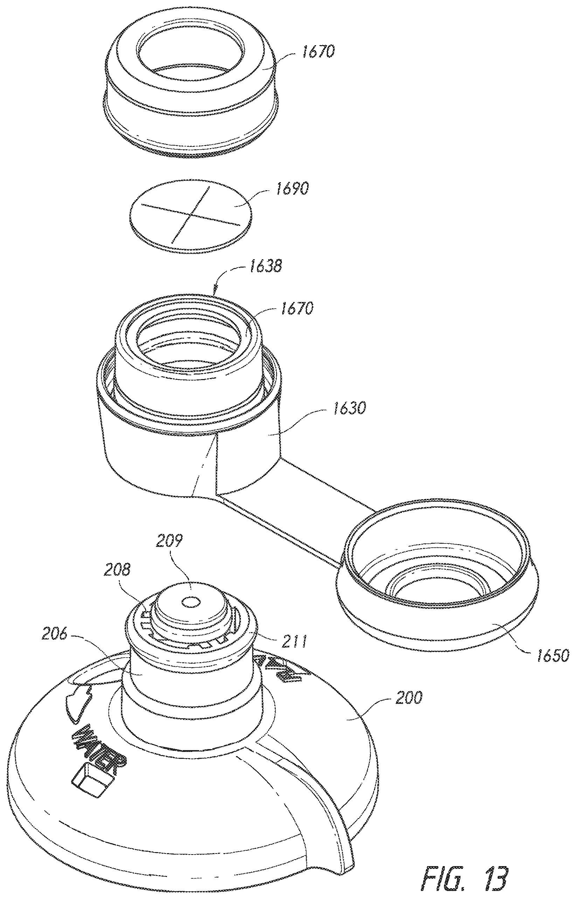

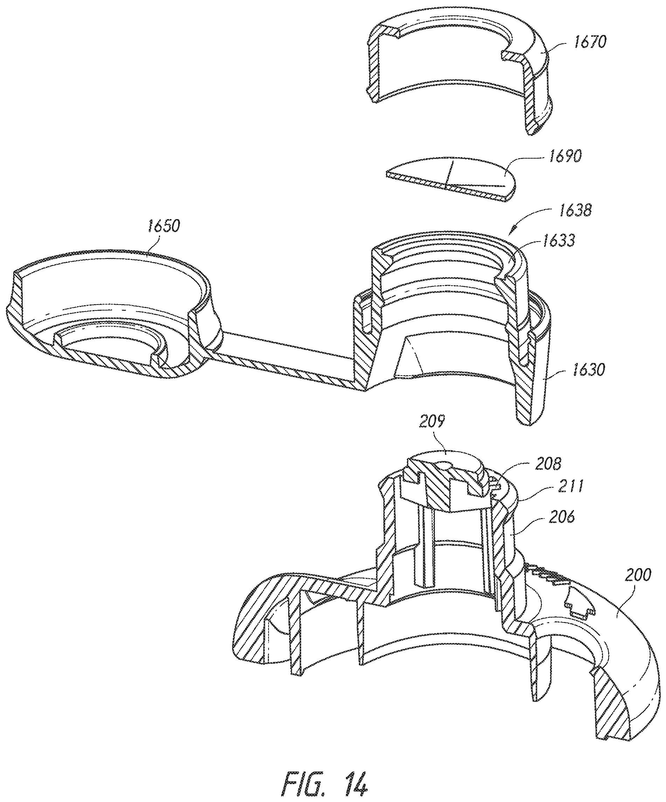

An example mixing cartridge or additive delivery system environment 100 may include a number of components for facilitating adjustable mixing of additive (flavoring) with a base liquid (water) as the base liquid flows through the cartridge. The components may be assembled in a generally stacked arrangement using snap-fit or threaded connections that facilitate quick assembly. The components may include a cartridge cap comprising an additive flow adjustment actuator 200 cooperating with and mounted for limited rotational movement relative to a cartridge cap base 250. Additive flow adjustment actuator 200 may include a main body 202 and an actuator dispensing spout 206 extending upward therefrom and defining an interior flow passage for mixed liquid dispensed from the cartridge. At the end of the spout 206, a number of radial flow passages 208 may be defined between a number of radial spokes that support a button-shaped central projection 209 (see FIGS. 13 and 14, as well). A spout cap retaining projection 211 may extend around the outer circumference of an upper area of the spout 206. This general spout configuration may be adapted to receive a push-pull cap to selectively seal or open the spout.

An additive reservoir assembly may be disposed on the underside the cap base 250 and may include a reservoir spout 400 having a flexible pouch (not shown) secured thereto (i.e., by welded seam to fitment 402 for containing a supply of additive. A reservoir housing 500 may surround the reservoir spout and pouch and may be secured to the reservoir spout. The reservoir protective housing 500, which may be a cage or a solid-walled (illustrated) cover, may be snap-fit to one or more flanges 404 on the pouch reservoir spout 400. The reservoir housing 500 and reservoir pouch may be made of a transparent or translucent material to permit a user to view and identify the nature of the additive supply.

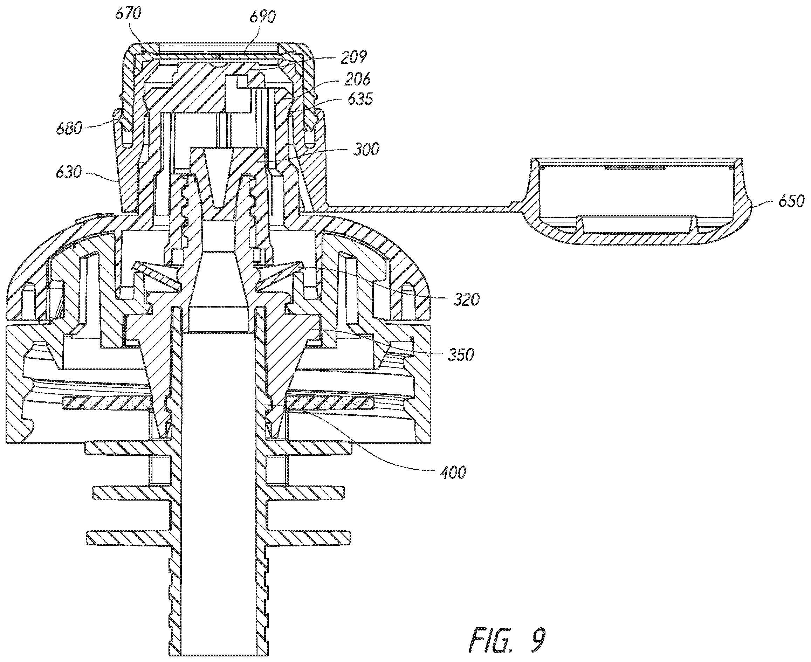

A mixing nozzle 350 may extend from the top of the cap base 250. The mixing nozzle 350 may include a threaded mixing nozzle stem 360 that includes integral threads 362 on an exterior surface thereof. The mixing nozzle 350 defines at least a portion of an additive flow path by way of an internal mixing nozzle additive flow passage 363 extending through the mixing nozzle stem 360. A bottom portion of the mixing nozzle 350 may receive the reservoir spout 400 thus providing for the flow of additive from the reservoir through the central passage 363. A plurality of radially arranged base liquid ports 358 may be defined in the mixing nozzle 350 to permit flow of base liquid and at least partially define a base liquid flow path through the mixing nozzle 350. An annular one-way base liquid flow valve 320 may be secured to the mixing nozzle 350 in a position where it provides for one-way flow of base liquid through the base liquid ports 358 and prevents backflow therethrough (see FIG. 9). As will be recognized, the mixing nozzle 350 defines parts of a base liquid flow path and part of an additive flow path therein. More particularly, the additive flow path is partially defined by a centrally or axially located passage 363 in the mixing nozzle, while the base liquid flow path includes the plural base liquid ports 358 that are disposed outward from the central location at least partially surrounding the additive liquid flow path. This flow geometry provides advantageous mixing and flow characteristics as further described in the above related applications.

Disposed between the additive flow adjustment actuator 200 and cartridge cap base 250 is an additive flow metering component 300, which cooperates with a mixing nozzle 350 to provide for adjustable mixture of additive with the base liquid. A conical seat an upper portion of the mixing nozzle 350 cooperates with a conical surface on the metering component 300. User rotation of the actuator 200 relative to the cap base 250 will rotate the metering component 300 relative to the mixing nozzle spout 360 and by way of threads 362 will permit a user to adjust the space between the conical surface on the metering component 300 and the conical seat on the mixing nozzle 350, which in turn, will adjust the flow of additive introduced into the base liquid as it flows through the cartridge. A number of axially extending guide rails 216 are defined on an interior of the spout portion 206 and define guide channels therebetween, which cooperate with and guide complementarily-shaped guide elements 316 on additive flow metering component 300 and allow it to slide upward or downward relative to the actuator 200 when the actuator 200 is rotated.

In operation, the additive flow adjustment actuator may be rotated relative to the cap base 250. Such rotation causes rotation of the metering component/insert 300 relative to the mixing nozzle 350, resulting in slight axial, i.e., upward or downward movement of the insert 300 by way of the cooperating threads between the insert 300 and nozzle 350. Axial movement of the metering insert 300 results in a change of additive flow through the metering area between the conical portion of insert 300 and the corresponding surface on mixing nozzle 350. As base liquid flows into the cartridge assembly, resulting from pressure changes within the base liquid container, i.e., from squeezing of a flexible bottle and or by suction applied by a user during consumption, and/or inverting or tipping, such action results in flow of additive and base liquid is mixed with additive at the appropriate level determined by the rotational position of the additive flow adjustment actuator.

As will be recognized, in the above-described environment, after a first use, there may be a residual mixture in a mixing section or zone in the cartridge that may be defined between the base liquid flow seal 320 and the exit passage of the spout 206. In operation, after a user takes a sip of the beverage, for example, this space may be occupied by mixed residual liquid. The base liquid flow seal 320 prevents backflow of the mixed liquid back through the cartridge. As such, the residual liquid in the mixing section or zone may be prone to drip upon the next dispensing (sip) by the user. Moreover, the use of a push-pull closure on the spout 206 may compress the residual liquid in the mixing section or zone, causing undesirable drip or discharge.

In accordance with aspects of the disclosure, the above-described environment may be provided with a dispensing closure valve which improves the operation of the mixing cartridge based additive delivery system. An example dispensing closure valve assembly 600 may include a closure base 630, a lid 650, a valve retainer 670 and valve 690. Details of each of these components and their operation will next be described.

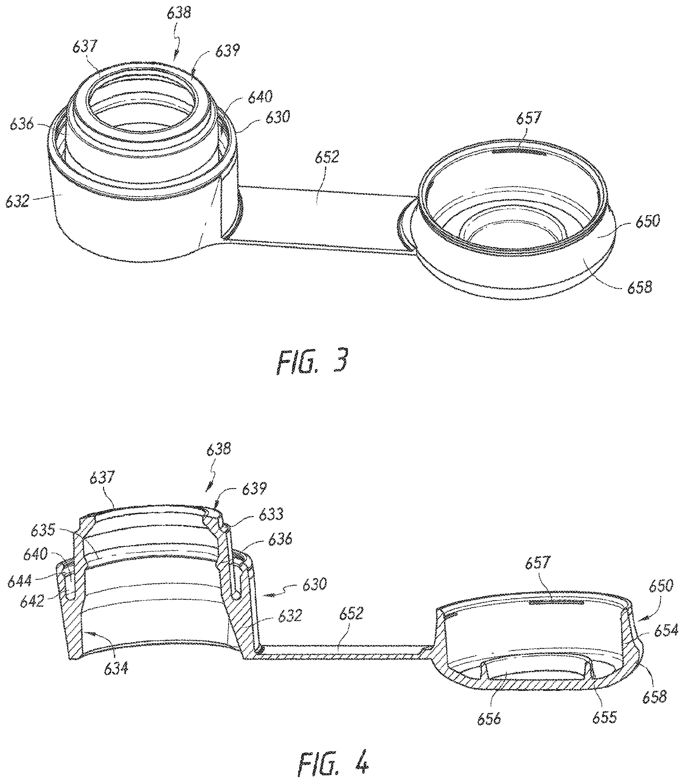

An example closure base 630 and lid 650 are illustrated in FIGS. 3 and 4. Closure base 630 may include an annular spout-engaging skirt 632 having a tapered inner lower surface 634 to facilitate quick alignment/installation on the spout post 206, for example (FIGS. 1 and 2). A closure base spout 636 may extend upward from the skirt 632 to a valve retaining end 638. Closure base 630 may have a valve retainer interlock 640 for engaging and securing the valve retainer 670 (FIGS. 1, 2, 5 and 6) on the closure base 630. Interlock 640 may include an annular retainer securing groove or recess 642 formed in an upper portion of the closure skirt 632 and extending concentrically around a lower portion of the closure base spout 636. One or more annular interlock recesses or grooves 644 may be included in the retainer securing groove or recess 642 for providing a friction or interference fit with complimentary elements on the valve retainer 670 (FIG. 1) to secure the valve retainer to the closure base 630. Valve retaining end 638 of the closure base spout 636 may include a land or sealing surface 639 and an annular shoulder 670 both for engaging and/or supporting the valve 670 (FIGS. 1 and 2) as will be explained further below. The land or sealing surface 639 may have a slightly inclined orientation, extending upward and radially inward, such that a well-defined circumferential edge or lip 637 is provided to engage an underside of the valve. This permits close control of the valve sealing and performance characteristics. A spout post engaging bead or ridge 635 may be formed on the interior surface of the closure base spout 636 to secure the closure base 630 to the spout post 206 by forming an interference fit with a counterpart ridge or bead 205 (FIGS. 2 and 9) on the spout post 206.

Closure base 630 may include a lid 650 connected thereto via a tethering strap 652. Tethering strap may also function as a lid release assist feature to enable one-hand removal of the lid 650 from a closed position on the retainer 670, as will be described. Closure base 630, lid 650 and tethering strap may be formed integrally as a unitary piece from a suitable thermoplastic, such as polypropylene. Lid 650 may include an annular lid wall 654 extending from a lid end wall 655. A lid sealing ring 656 may extend from the lid wall 654 and provide sealing engagement with the valve and/or retainer, as will be described. Lid 650 may have a number of lid interlock projections 657 extending from an upper, inner surface lid wall 654. Interlock projections 657 may engage one or more grooves or other complimentarily shaped elements on the valve retainer 670 to secure the lid 650 in place thereon. Lid wall 654 may include an annular gripping projection 658 to permit a user to easily remove the lid 650 in a one-hand operation, i.e., by prying it with the user's thumb.

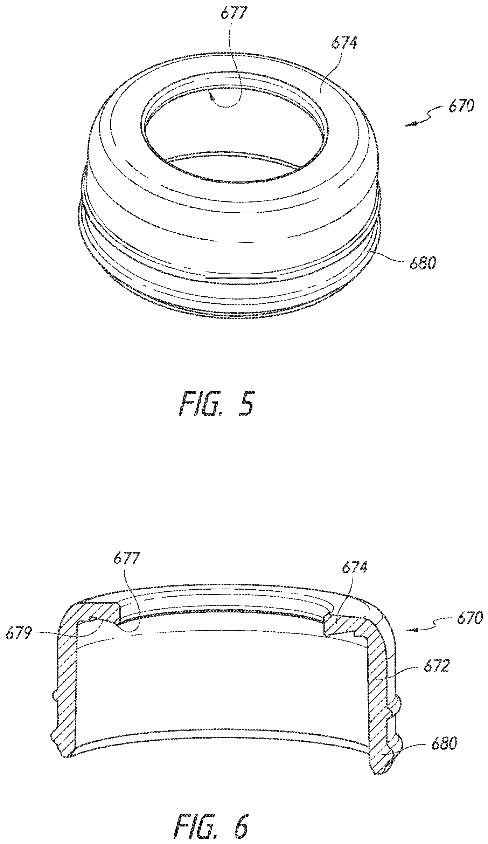

FIGS. 5 and 6 illustrate an example valve retainer 670 according to aspects of the disclosure. An annular valve retainer wall 672 extends upward to an inwardly projecting valve retaining ledge 674 with a valve sealing interface 676 defined on the underside thereof for engaging the valve. Valve sealing interface 676 may have an inner lip 677 and a tapered, undercut portion 679 to ensure that the valve surface is sufficiently engaged by the inner lip 677. That is, when the retainer 670 is secured to the cap base 630, the inner lip 677 will apply a concentrated, localized sealing force on the valve along a well-defined perimeter coinciding with the diameter of the annular inner lip 677. As will be recognized, the inner lip 677 in conjunction with the lip or edge 637 on the valve land 639 (FIG. 4) of the closure base spout 635 provides precision control of the amount and location of the clamping force on the valve, which in turn permits close control of the valve sealing and valve performance, i.e., flow characteristics. The outer annular surface of the valve retainer wall 672 may include an annular retaining projection 680 which cooperates with the interlock 640 (FIG. 4) on the closure cap 630. An annular lid retaining projection 682 may also extend around the perimeter of the valve retainer wall 672 and cooperate with the lid interlock projections 657 (FIG. 4) to retain the lid 650 on the valve retainer 670.

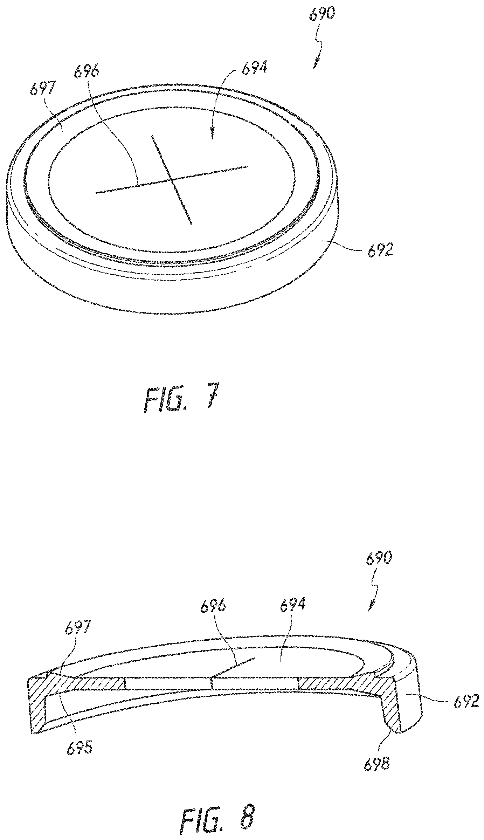

FIGS. 7 and 8 illustrate an example valve 690 according to an aspect of the disclosure. Valve 690 may include an annular valve skirt or wall 692 and a valve membrane 694 extending across the skirt 692. Valve 690 may include one or more valve passages 696 defined therein. In the instant case, the valve passage has a slit configuration with two generally orthogonal slits being formed or being cut in the membrane 694. Other slit configurations are contemplated, including parallel slits or partial concentric or circumferential slits. In addition, other passage forms besides slits are contemplated, including perforations of circular or other shapes. As will be recognized, the thickness of membrane 694, the configuration of the slits or passages 696, the material and associated resiliency of the membrane and other attributes may be selected to provide suitable flow and pressure characteristic for the valve. Applicant has found that favorable flow characteristics may be achieved with the use of Shore 50A food grade silicone for the valve membrane with a thickness of about 0.45 mm and slit configuration of two orthogonal slits, each having a length (diametrical) of about 11 mm. Further, a valve circumferential lip (637 in FIG. 4) and valve retainer inner lip (677 in FIG. 6) diameter of about 12 mm in combination with the above-described valve configuration may provide favorable flow characteristics and control of liquid in the mixing section. Valve skirt 692 may include a tapered lower surface 698 to facilitate quick and/or automated assembly on the cap 630. Opposed tapered surfaces 697 and 695 may extend at an angle of about 23 degrees to one another and may be provided for a complimentary fit with the corresponding surfaces on the cap land 639 (FIG. 4) and the valve retainer 670.

FIG. 9 is a cross-section showing the dispensing closure 600 and constituent components assembled in an additive delivery system environment. According to aspects of the disclosure, the valve membrane may extend across the top of the spout post, with the slits oriented in a particular way relative to the spout structure. It will be recognized that a residual mixture volume, mixing zone or mixing section may be defined within the assembly between the base liquid flow seal 320 and the mixture dispensing valve 690. Applicant has discovered that favorable flow and mixing characteristics and uniformity of flavor may be achieved by the combination of the described dispensing closure valve and the base liquid valve situated in the described configuration.

As will be recognized, the actuator spout 206 and the specific flow characteristics of the spout, including the radial spokes and intervening radial flow passages therebetween as well as the button shaped projection thereon may provide desirable flow characteristics when combined with the dispensing closure valve 600. More specifically, the radial flow passages may guide respective streams of mixed liquid to particular local areas of the valve membrane and impinge each "sector" defined by the slits in the same way. Moreover, the button-shaped projection prevents flow in the central area of the valve membrane, i.e., where the slits intersect, where the membrane provides less resistance to flow. This interaction may thereby provide a more consistent and predictable stream of liquid dispensed through the closure dispensing valve.

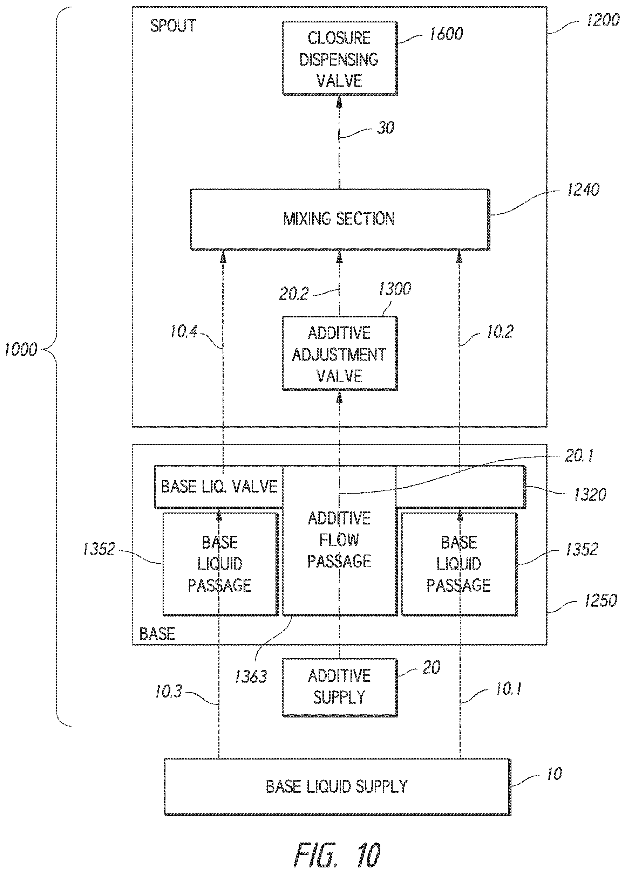

FIG. 10 is a schematic illustration of the additive delivery systems and constituent components contemplated by the instant disclosure. The additive delivery system is generally represented by the reference number 1000. As represented in FIG. 10, multiple base liquid flow paths 10.1 and 10.3 (in this case two are depicted in FIG. 10) may be defined by virtue of multiple flow passages, such as passages 358 (FIG. 1) in the mixing nozzle 350, which may be in a radial pattern around a central additive flow passage 1363. A base liquid flow valve 1320, which provides only one-way flow and prevents backflow of the base liquid, may be associated with each of the base liquid flow paths, as for example, the seal 320 in FIG. 1. Thus, base liquid flow paths 10.1, 10.2, 10.3 and 10.4 are defined from the base liquid supply 10, through base liquid passages 1352 in the base 1250, through the base liquid flow valve 1320 to the mixing section 1240. An additive flow path 20.1 and 20.3 is defined from the additive supply 20 through an additive flow passage 1363 in the base 1250, through additive adjustment valve 1300 to a mixing section 1340. A mixed liquid flow path 30 is defined through the mixing section to the closure dispensing valve 1600. As will be recognized, although additive adjustment valve and additive flow passage elements are illustrated as being disposed in the spout or in the base, their location may be modified and/or interchanged with or to other components in the system within the scope of the disclosure. Similarly, the position and relative orientation of flow paths for the base liquid and the additive may be modified without departing from the scope of the disclosure.

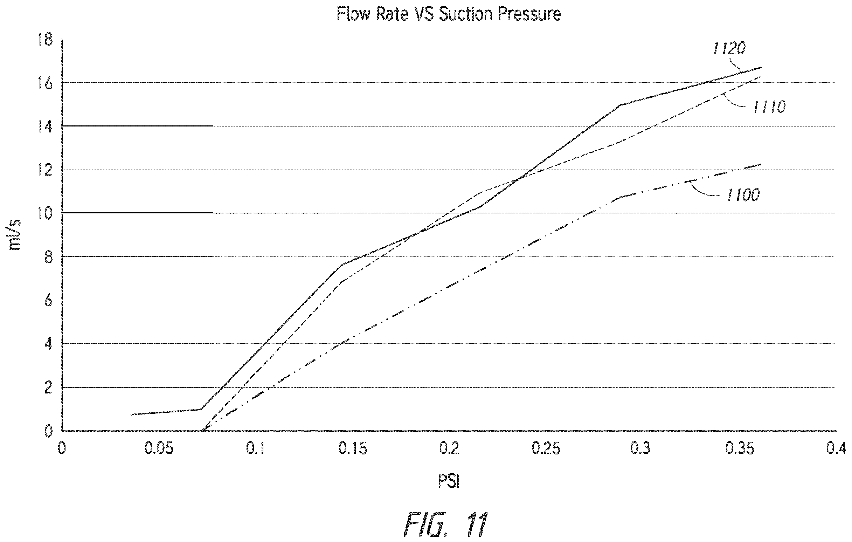

FIG. 11 is a graphical representation of pressure (suction) and flow characteristics for additive delivery systems according to aspects of the disclosure. FIG. 11 also depicts, as the curve 1110 pressure and flow characteristics for systems in which only a one-way base liquid valve is provided. Curve 1120 represents pressure and flow characteristics of a dispensing closure valve as described herein in isolation (i.e., not combined with the environments described herein). As will be recognized, the interaction of the dispensing closure valve and the base liquid flow valve in the described environments may provide improved mixture flow characteristics. More specifically, curve 1100 shows, from about 482 Pa to about 2068 Pa ( 0.07 psi to about 0.3 psi), a substantially constant proportional (linear) relationship between the flow rate, from 0.0 to about 10.5 ml/s. In contrast, the flow and pressure characteristics of the isolated dispensing closure valve and isolated base liquid valve exhibit variances in flow rate proportion within the same range. As such, it will be recognized that the interaction of the dispensing closure valve and mixing cartridge environment including the base liquid flow valve as described herein according to aspects of the disclosure provide unexpected results with regard to the achieved flow and pressure characteristics.

Still referring to FIG. 11, it will also be recognized that the flow rate for the dispensing closure valve is preferably selected to be higher than the flow rate for the base liquid valve at most pressures. The dispensing closure valve should be configured to have less impact on flow than the base liquid flow valve. As will also be recognized, the base liquid valve may provide higher threshold pressure for any flow of base liquid to occur and may be configured to prevent flow at the expected pressure on the base liquid valve that may coincide with full inverted base liquid container so as to prevent flow of base liquid when a water bottle is inverted but no suction pressure is applied to the dispensing closure valve. This will isolate the mixing section from the static pressure of the inverted supply of base liquid in the container. This environment enables the dispensing closure valve to be configured to a lower threshold pressure in order to prevent flow from the mixing section of the cartridge when inverted but without suction applied to the dispensing closure valve, i.e., inverted but not sipped by a user.

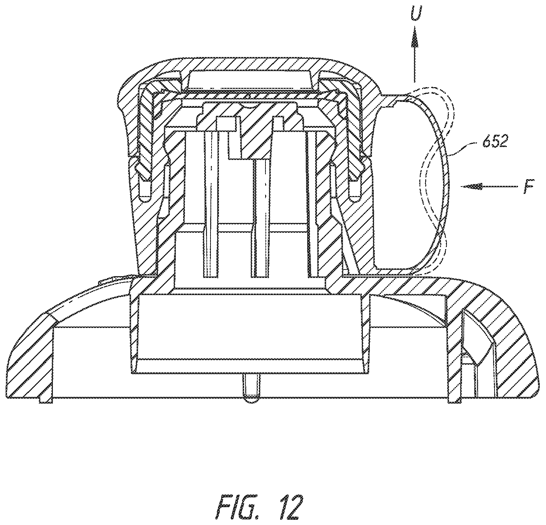

According to an aspect of the disclosure, the tethering strap may function as an assist feature for removal of the lid in a one hand operation. FIG. 12 is a cross section showing the dispensing closure lid in a closed or installed position on the valve retainer. Application of force, for example, by the user's thumb, in the direction of arrow "F" may result in an upward (lifting) force "U" on the lid at the lid/tethering strap interface. The tethering strap may be attached a lower position on the closure base and may abut an upper surface of the actuator 200 such that the lower part of the tethering strap is constrained against bulging or movement in a downward direction. Application of force "F" thus may result in a deformation of the tethering strap into the shape shown in dotted lines in FIG. 12 and an upward force "U" on the associated side (right side in FIG. 12) of the lid sufficient to overcome the lid interlock on the valve retainer and thus cause the lid to flip open.

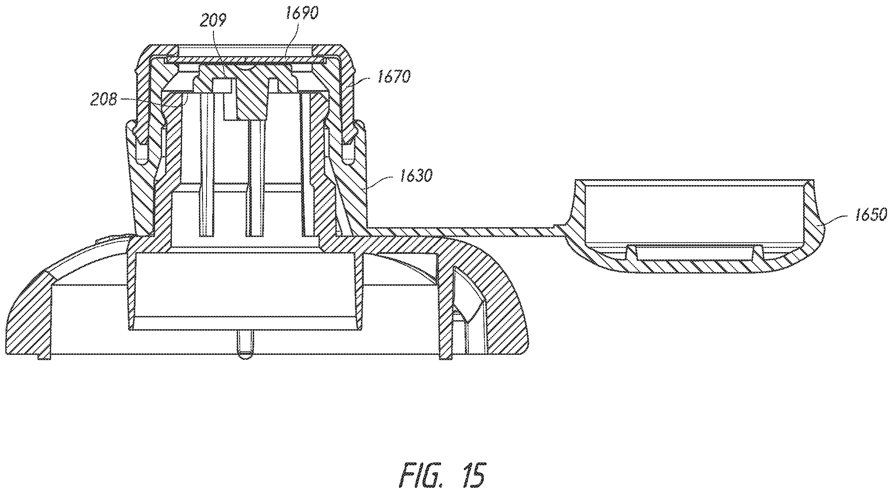

FIGS. 13-15 illustrate an alternative embodiment for a dispensing closure valve according to aspects of the disclosure. In this embodiment, valve 1690 may be configured without an annular shoulder or skirt and as a flat membrane. Closure base 1630 may include an annular recess 1670 on the valve mounting end 1638 for receiving the slit valve 1690 therein. As shown particularly in FIG. 15, slit valve 1690 may be secured in a position that is in close proximity to or abutting the surface of the projection 209 from the spout 206 to achieve desirable flow characteristics and prevent inadvertent leakage or dripping.

The components described above may be made using injection molding or other known techniques using thermoplastics, such as food grade polypropylene or like materials. The disclosure also contemplates other materials, such as stainless steel or other food grade or non-food grade materials.

It should be understood that implementation of other variations and modifications of the invention in its various aspects may be readily apparent to those of ordinary skill in the art, and that the invention is not limited by the specific embodiments described herein. It is therefore contemplated to cover, by the present invention any and all modifications, variations or equivalents that fall within the scope of the appended claims. For example, while the metering function of the additive delivery system has been described using a conical metering component or element, other structures may be used, such as flow control elements that utilize gate or ball valve or other components that provide adjustment of the metering area and flow passage based on user movement of an actuator. In addition, while snap fittings have been described for components, it will be recognized that other fastening structure or techniques may be used, such as threaded or screw fittings, friction fittings, or adhesive or welding techniques.

## Claims

1. An additive delivery system comprising:
a base cap (250, 1250) for mounting the additive delivery system on a container of base liquid;
a spout (206) cooperatively associated with the base cap;
a base liquid flow path (10.1, 10.2, 10.3, 10.4);
a base liquid flow valve (320, 1320) disposed in the base liquid flow path;
an additive flow path (20.1, 20.2);
an additive adjustment valve (300, 1300) disposed in the additive flow path;
the base liquid flow path and additive flow path communicating with a mixing section (1240); and
a dispensing closure valve (600, 1600) in communication with the mixing section,
wherein the dispensing closure valve is configured to prevent flow from the mixing section below a threshold pressure,
**characterized in that**
the base liquid flow valve provides a higher threshold pressure for any flow of base liquid to occur than the dispensing closure valve.

2. The additive delivery system of claim 1, wherein the dispensing closure valve and the base liquid flow valve in combination exhibit a constant proportional relationship between suction pressure and flow rate within a suction pressure range from about 482 Pa (0.07 psi) to 2068 Pa (0.3 psi).

3. The additive delivery system of claim 1 or claim 2, wherein the dispensing closure valve and the base liquid flow valve in combination exhibit a constant proportional relationship between suction pressure and flow rate within a flow rate range from about 0.0 to about 10.5 ml/s.

4. The additive delivery system of any one of claims 1-3, wherein the base liquid flow valve is configured to prevent flow at pressure coinciding with a full inverted base liquid container.

5. The additive delivery system of any one of claims 1-4, further comprising an additive flow adjustment actuator mounted for rotational movement relative to the base cap.

6. The additive delivery system of claim 5, wherein the spout is disposed on a main body of the additive flow adjustment actuator.

7. The additive delivery system of any one of claims 1-6, wherein the spout defines an interior flow passage for mixed liquid.

8. The additive delivery system of any one of claims 1-7, wherein the dispensing closure valve includes a valve membrane (694).

9. The additive delivery system of claim 8, wherein the valve membrane (694) is adapted to extend across the top of the spout (206).

10. The additive delivery system of claim 8 or claim 9, wherein the valve membrane includes a slit valve (1690) and the slit valve is adapted to abut a projection (209) of the spout.

11. The additive delivery system of claim 10, wherein the projection is adapted to prevent flow in a central area of the valve membrane.

12. The additive delivery system of claim 1, wherein the dispensing closure valve includes a valve and a valve retainer adapted to support and retain the valve within the dispensing closure valve.

13. The additive delivery system of claim 12, wherein the dispensing closure valve includes a closure base (630) secured to the spout (206) and a closure lid (650) secured to the closure base by a tethering strap (652), the closure base, the closure lid and the tether strap being integrally formed as a unitary part, the tethering strap being adapted to exert a removing force on the closure lid when the closure lid is installed on the valve retainer when a force is applied to the tethering strap.

14. The additive delivery system of claim 13, wherein the closure lid further comprises an interior wall for engaging a surface of the valve retainer and for engaging the valve when the closure lid is installed on the valve retainer.

15. The additive delivery system of claim 13, wherein the closure base includes a skirt (632) to facilitate alignment and installation of the closure base on the spout.

16. The additive delivery system of claim 1, wherein the dispensing closure valve is secured to the spout.

17. The additive delivery system of claim 1, wherein the base liquid flow valve is a one-way valve adapted to prevent backflow of the base liquid.

18. The additive delivery system of claim 1, wherein the flow rate for the dispensing closure valve is higher than the flow rate for the base liquid valve.

## Patentansprüche

1. Additives Abgabesystem, umfassend:
eine Basiskappe (250, 1250) zum Befestigen des additiven Abgabesystems an einem Behälter für die Basisflüssigkeit; ein Auslauf (206), der mit der Basiskappe zusammenwirkt; einen Basisflüssigkeitsflusspfad (10.1, 10.2, 10.3, 10.4);
ein Basisflüssigkeitsflussventil (320, 1320), das in dem Basisflüssigkeitsflusspfad angeordnet ist;
einen additiven Flusspfad (20.1, 20.2);
ein additives Einstellungsventil (300, 1300), das in dem additiven Flusspfad angeordnet ist;
wobei der Basisflüssigkeitsflusspfad und der additive Flusspfad mit einem Mischabschnitt (1240) in Verbindung stehen; und
ein Abgabeverschlussventil (600, 1600), das mit dem Mischabschnitt in Verbindung steht, wobei das Abgabeverschlussventil konfiguriert ist, um einen Fluss aus dem Mischabschnitt unterhalb eines Schwellendrucks zu verhindern,
**dadurch gekennzeichnet, dass**
das Basisflüssigkeitsflussventil einen höheren Schwellendruck für das Auftreten eines Flusses von Basisflüssigkeit bereitstellt als das Abgabeverschlussventil.

2. Additives Abgabesystem nach Anspruch 1, wobei das Abgabeverschlussventil und das Basisflüssigkeitsflussventil in Kombination eine konstante proportionale Beziehung zwischen Ansaugdruck und Flussrate innerhalb eines Ansaugdruckbereichs von etwa 482 Pa (0,07 psi) bis 2068 Pa (0,3 psi) aufweisen.

3. Additives Abgabesystem nach Anspruch 1 oder 2, wobei das Abgabeverschlussventil und das Basisflüssigkeitsflussventil in Kombination eine konstante proportionale Beziehung zwischen Saugdruck und Flussrate innerhalb eines Flussratenbereichs von etwa 0,0 bis etwa 10,5 ml/s aufweisen.

4. Additives Abgabesystem nach einem der Ansprüche 1 bis 3, wobei das Basisflüssigkeitsflussventil konfiguriert ist, um einen Fluss bei einem Druck zu verhindern, der mit einem vollen, umgedrehten Basisflüssigkeitsbehälter zusammenfällt.

5. Sdditives Abgabesystem nach einem der Ansprüche 1 bis 4, ferner umfassend einen additiven Flusseinstellaktuator, der für eine Drehbewegung relativ zur Basiskappe befestigt ist.

6. Additives Abgabesystem nach Anspruch 5, wobei der Auslauf an einem Hauptkörper des additiven Flusseinstellaktuators angeordnet ist.

7. Additives Abgabesystem nach einem der Ansprüche 1 bis 6, wobei der Auslauf einen inneren Flussdurchgang für gemischte Flüssigkeit definiert.

8. Additives Abgabesystem nach einem der Ansprüche 1 bis 7, wobei das Abgabeverschlussventil eine Ventilmembran (694) einschließt.

9. Additives Abgabesystem nach Anspruch 8, wobei die Ventilmembran (694) geeignet ist, sich über die Oberseite des Auslaufs (206) zu erstrecken.

10. Additives Abgabesystem nach Anspruch 8 oder 9, wobei die Ventilmembran ein Schlitzventil (1690) einschließt und das Schlitzventil geeignet ist, an einem Vorsprung (209) des Auslaufs anzuliegen.

11. Additives Abgabesystem nach Anspruch 10, wobei der Vorsprung geeignet ist, den Fluss in einem zentralen Bereich der Ventilmembran zu verhindern.

12. Additives Abgabesystem nach Anspruch 1, wobei das Abgabeverschlussventil ein Ventil und einen Ventilhalter einschließt, der geeignet ist, das Ventil innerhalb des Abgabeverschlussventils zu stützen und zu halten.

13. Additives Abgabesystem nach Anspruch 12, wobei das Abgabeverschlussventil eine Verschlussbasis (630), die an dem Auslauf (206) befestigt ist, und einen Verschlussdeckel (650) einschließt, der an der Verschlussbasis durch ein Halteband (652) befestigt ist, wobei die Verschlussbasis, der Verschlussdeckel und das Halteband einstückig als ein einheitliches Teil gebildet sind, wobei das Halteband geeignet ist, eine Entfernungskraft auf den Verschlussdeckel auszuüben, wenn der Verschlussdeckel auf dem Ventilhalter installiert ist, wenn eine Kraft auf das Halteband ausgeübt wird.

14. Additives Abgabesystem nach Anspruch 13, wobei der Verschlussdeckel ferner eine Innenwand für den Eingriff mit einer Oberfläche des Ventilhalters und für den Eingriff mit dem Ventil umfasst, wenn der Verschlussdeckel auf dem Ventilhalter installiert ist.

15. Additives Abgabesystem nach Anspruch 13, wobei die Verschlussbasis eine Schürze (632) einschließt, um die Ausrichtung und Installation der Verschlussbasis auf dem Auslauf zu erleichtern.

16. Additives Abgabesystem nach Anspruch 1, wobei das Abgabeverschlussventil an dem Auslauf befestigt ist.

17. Additives Abgabesystem nach Anspruch 1, wobei das Basisflüssigkeitsflussventil ein Einwegventil ist, das einen Rückfluss der Basisflüssigkeit verhindert.

18. Additives Abgabesystem nach Anspruch 1, wobei die Flussrate für das Abgabeverschlussventil höher ist als die Flussrate für das Basisflüssigkeitsventil.

## Revendications

1. Système de diffusion d'additifs comprenant :
un capuchon de base (250, 1250) permettant de monter le système de diffusion d'additifs sur un récipient de liquide de base ;
un bec verseur (206) associé de manière coopérative au capuchon de base ;
une voie d'écoulement de liquide de base (10.1, 10.2, 10.3, 10.4) ;
une vanne d'écoulement de liquide de base (320, 1320) disposée dans la voie d'écoulement de liquide de base ; une voie d'écoulement d'additif (20.1, 20.2) ;
une vanne de réglage d'additif (300, 1300) disposée dans la voie d'écoulement d'additif ;
la voie d'écoulement de liquide de base et la voie d'écoulement d'additif communiquant avec une section de mélange (1240) ; et
une vanne de fermeture de distribution (600, 1600) en communication avec la section de mélange, dans lequel la vanne de fermeture de distribution est conçue pour empêcher l'écoulement à partir de la section de mélange en dessous d'une pression seuil,
**caractérisé en ce que**
la vanne d'écoulement de liquide de base fournit une pression seuil plus élevée pour tout écoulement de liquide de base à survenir que la vanne de fermeture de distribution.

2. Système de diffusion d'additifs selon la revendication 1, dans lequel la vanne de fermeture de distribution et la vanne d'écoulement de liquide de base en combinaison présentent une relation proportionnelle constante entre la pression d'aspiration et le débit dans une plage de pression d'aspiration allant d'environ 482 Pa (0,07 psi) à 2 068 Pa (0,3 psi).

3. Système de diffusion d'additifs selon la revendication 1 ou la revendication 2, dans lequel la vanne de fermeture de distribution et la vanne d'écoulement de liquide de base en combinaison présentent une relation proportionnelle constante entre la pression d'aspiration et le débit dans une plage de débit allant d'environ 0,0 à environ 10,5 ml/s.

4. Système de diffusion d'additifs selon l'une quelconque des revendications 1 à 3, dans lequel la vanne d'écoulement de liquide de base est conçue pour empêcher l'écoulement à une pression coïncidant avec un récipient de liquide de base entièrement renversé.

5. Système de diffusion d'additifs selon l'une quelconque des revendications 1 à 4, comprenant en outre un actionneur de réglage d'écoulement d'additif monté pour un mouvement de rotation par rapport au capuchon de base.

6. Système de diffusion d'additifs selon la revendication 5, dans lequel le bec verseur est disposé sur un corps principal de l'actionneur de réglage d'écoulement d'additif.

7. Système de diffusion d'additifs selon l'une quelconque des revendications 1 à 6, dans lequel le bec verseur définit un passage d'écoulement intérieur pour le liquide mélangé.

8. Système de diffusion d'additifs selon l'une quelconque des revendications 1 à 7, dans lequel la vanne de fermeture de distribution comporte une membrane de vanne (694).

9. Système de diffusion d'additifs selon la revendication 8, dans lequel la membrane de vanne (694) est adaptée pour s'étendre sur le dessus du bec verseur (206).

10. Système de diffusion d'additifs selon la revendication 8 ou la revendication 9, dans lequel la membrane de vanne comporte une vanne à fente (1690) et la vanne à fente est adaptée pour venir en butée contre une saillie (209) du bec verseur.

11. Système de diffusion d'additifs selon la revendication 10, dans lequel la saillie est adaptée pour empêcher l'écoulement dans une zone centrale de la membrane de vanne.

12. Système de diffusion d'additifs selon la revendication 1, dans lequel la vanne de fermeture de distribution comporte une vanne et un dispositif de retenue de vanne adapté pour supporter et retenir la vanne à l'intérieur de la vanne de fermeture de distribution.

13. Système de diffusion d'additifs selon la revendication 12, dans lequel la vanne de fermeture de distribution comporte une base de fermeture (630) fixée au bec verseur (206) et un couvercle de fermeture (650) fixé à la base de fermeture par une sangle d'attache (652), la base de fermeture, le couvercle de fermeture et la sangle d'attache étant formés intégralement d'un seul tenant, la sangle d'attache étant adaptée pour exercer une force de retrait sur le couvercle de fermeture lorsque le couvercle de fermeture est installé sur le dispositif de retenue de vanne lorsqu'une force est appliquée à la sangle d'attache.

14. Système de diffusion d'additifs selon la revendication 13, dans lequel le couvercle de fermeture comprend en outre une paroi intérieure permettant de se mettre en prise avec une surface du dispositif de retenue de vanne et de se mettre en prise avec la vanne lorsque le couvercle de fermeture est installé sur le dispositif de retenue de vanne.

15. Système de diffusion d'additifs selon la revendication 13, dans lequel la base de fermeture comporte une jupe (632) pour faciliter l'alignement et l'installation de la base de fermeture sur le bec verseur.

16. Système de diffusion d'additifs selon la revendication 1, dans lequel la vanne de fermeture de distribution est fixée au bec verseur.

17. Système de diffusion d'additifs selon la revendication 1, dans lequel la vanne d'écoulement de liquide de base est une vanne unidirectionnelle adaptée pour empêcher le reflux du liquide de base.

18. Système de diffusion d'additifs selon la revendication 1, dans lequel le débit de la vanne de fermeture de distribution est supérieur au débit de la vanne de liquide de base.
